# EUROPÄISCHE PATENTSCHRIFT

(11) **EP 2 861 050 B1**
(45) Veröffentlichungstag und Bekanntmachung des Hinweises auf die Patenterteilung: **01.03.2017**
(21) Anmeldenummer: 13728369.3
(22) Anmeldetag: 06.06.2013
(51) Int. Cl.: A01B 1/02

(54) **HANDSCHAUFEL**
HAND SHOVEL
PELLE À MAIN

(30) Priorität: 12.06.2012 CH 823122012
(43) Veröffentlichungstag der Anmeldung: 22.04.2015
(73) Patentinhaber: Natolino, Andreas, 6574 Vira Gambarogno (CH)
(72) Erfinder: Natolino, Andreas, 6574 Vira Gambarogno (CH)
(74) Vertreter: Zardi, Marco
(86) Internationale Anmeldenummer: PCT/EP2013/061713
(87) Internationale Veröffentlichungsnummer: WO 2013/186117

(56) Entgegenhaltungen:
- WO-A1-99/49718
- DE-A1- 3 104 446
- DE-U1-202010 011 607
- US-A- 1 109 469
- US-A- 2 318 277
- US-A1- 2005 029 825

## Beschreibung

Die Erfindung betrifft eine Handgrabschaufel, insbesondere zur Anwendung in Gartenanlagen, in der Bauindustrie oder dergleichen.

Handschaufeln zur Anwendung in Grün- und Gartenanlagen sowie in Privaten Gärten sind hinlänglich bekannt.
So zeigt die DE-U-8805417 eine Handschaufel zur Aufnahme von Müll oder Schüttgut mit deltaförmigem Schaufelblatt und einer somit breiten Schaufelöffnung. Hierzu ist ein im Wesentlichen dreieckiger Zuschnitt aus metallischem Flachmaterial allein durch Biegen entsprechend gestaltet, so dass Schaufelblatt und mehrkantiger Griff eine Einheit bilden.

Gemäss DE-U-202010011607 umfasst eine Schaufel ein Schaufelblatt und eine Aufnahmehülse für den Schaufelstiel, wobei das Schaufelblatt eine gerade Schaufelblattkante aufweist und mit einer U-förmig verlaufenden Aufkantung versehen ist. Zu beiden Seiten des Schaufelstiels verläuft parallel zur Schaufelblattkante eine Trittkante. Das Schaufelblatt ist im Bereich der Schaufelblattkante eben. In Richtung auf die Aufnahmehülse folgt ein gewölbter Bereich, wobei sich die Wölbung längs und quer zur Schubrichtung erstreckt. Die Schenkel der Aufkantung sind hingegen nicht gewölbt.

Ein manuelles Grabungsgerät nach DE-U-202008007479 umfasst ein Griffelement mit einem ersten und einem zweiten Ende sowie Grabungsmittel, die am ersten Ende befestigt sind. Das Grabungsmittel ist als Schaufel- oder Hackenblatt ausgebildet.

Beim genannten Stand der Technik schliesst der Schaufelstiel oder Schaufelgriff in Längsrichtung an das Schaufelblatt und die Hauptachse des Schaufelblatts verläuft im Arbeitszustand zumindest weitgehend parallel zur Längsachse des Griffs oder Schaufelstiels, was einen freien Arbeitsraum erfordert, der grösser als die Länge des Griffs oder Schaufelstiels sein muss. In kleineren Arbeitsräumen resp. Freiräumen ist die Einsetzbarkeit der Schaufeln entsprechend begrenzt.

Der Erfindung liegt die Aufgabe zugrunde, die geschilderten Nachteile des Standes der Technik zu meiden und eine Handgrabschaufel, insbesondere zur Anwendung in Gartenanlagen und dergleichen zu entwickeln, die ein ermüdungsarmes Arbeiten bei minimiertem Aushub ebenso ermöglicht wie eine Anwendung auf kleinstem Raum, z. B. in Blumentöpfen, kleine Wannen und Säcken.

Die Aufgabe ist mit den Merkmalen des Patentanspruchs 1 gelöst.

Die erfindungsgemässe Handgrabschaufel umfasst eine mit einem Stiel verbundene Schaufelmulde und einem am Stiel angeordneten Griff, wobei Griff und Schaufelmulde V-förmig zueinander angeordnet sind. Die Schaufelmulde ähnelt in ihrer Gestalt einer Baggerschaufel.

Vorteilhafte Ausgestaltungen sind in den abhängigen Ansprüchen offenbart.

Die Muldenfläche der Schaufelmulde ist gebogen (resp. 3D-gewölbt (Eierschalen-Effekt)), weist aber zum Auslauf hin einen weitgehend geraden Abschluss auf.

Die Seitenwände der Schaufelmulde sind etwa senkrecht zur Muldenfläche angeordnet und kürzer als die Muldenfläche, so dass deren Abschluss einen Überstand bildet. Die Muldenfläche kann zu den Seitenwänden hin leicht gewölbt oder auch eben sein.

Schaufelmulde und Stiel bestehen bevorzugt aus Stahl und zumindest im Bereich des Überstandes ist der Stahl der Muldenfläche gehärtet.

Der Abschluss der Muldenfläche kann mit Zinken versehen sein, angeformt oder angeordnet.

Der Griff ist ergonomisch geformt und infolge der Gestaltung der Schale am Stiel in seiner ergonomischen Lage fixiert. Der Stiel kann ggf. verstellbar und/oder schwenkbar sein resp. die Position des Stiels zur Schaufelmulde kann veränderbar sein.

Die erfindungsgemässe Handgrabschaufel ist handlich, robust und ergonomisch geformt. Sie ermöglicht eine sehr gute Hebelwirkung, was auch unter sehr beengten Raumbedingungen ein kraftsparendes, ermüdungsarmes und effektives graben ermöglicht. Der Aushub kann minimiert werden, es fallen nur geringste Mengen an zusätzlichem Aushubmaterial an, d. h. es entstehen keine schrägen oder einbrechenden Wandbereiche. Es können sowohl zylindrische Löcher wie auch Gräben zeit- und kraftsparend ausgehoben werden. Der Füllgrad resp. das aushebbare Volumen je Hub ist selbst bei gut fliessfähigem Aushub, z. B. Sand sehr hoch.

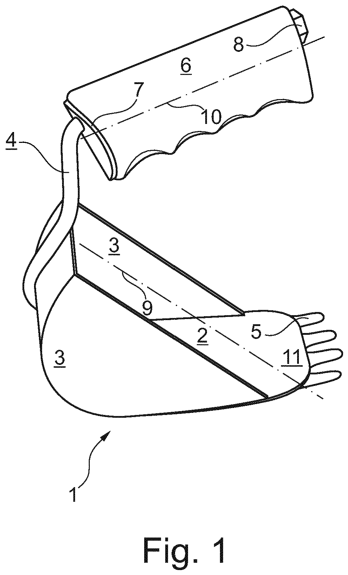

Die Erfindung wird nachfolgend in einem Ausführungsbeispiel anhand einer Zeichnung näher beschrieben. In der Zeichnung zeigen die
- Fig. 1:: eine Handgrabschaufel

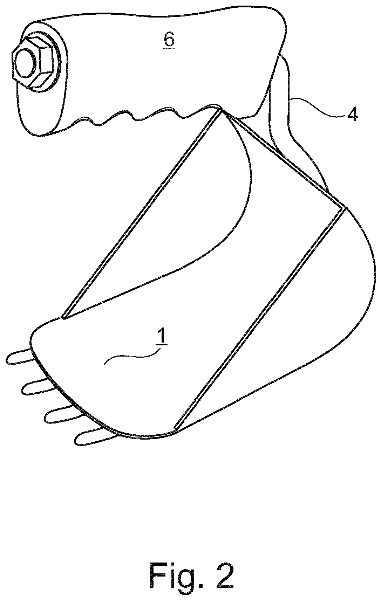

- Fig. 2:: die Handgrabschaufel in einer weiteren Ansicht.

Die erfindungsgemässe Handgrabschaufel umfasst eine mit einem Stiel 4 verbundene Schaufelmulde 1 und einem am Stiel 4 angeordneten Griff 6, wobei Griff 6 und Schaufelmulde 1 resp. eine Achse 9 der Schaufelmulde 1 und eine Achse 10 des Griffs 6 V-förmig zueinander angeordnet sind. Der Öffnungswinkel beträgt ca. 70°-80°, immer jedoch deutlich weniger als 90°.

Die Muldenfläche 2 der Schaufelmulde 1 ist gewölbt, weist aber zum Auslauf hin einen weitgehend geraden Abschluss auf. Parallele Seitenwände 3 der Schaufelmulde 1 sind etwa senkrecht zur Muldenfläche 2 angeordnet und kürzer als die Muldenfläche 2, so dass die Muldenfläche 2 einen Überstand 11 aufweist. Der gerade Bereich der Muldenfläche 2 beginnt bereits innerhalb der Seitenwände 3.

Die Muldenfläche 2 kann zu den Seitenwänden 3 hin leicht gewölbt oder auch eben sein, bleibt aber aus Stabilitätsgründen in Querrichtung gewölbt.

Schaufelmulde 1 und Stiel 4 bestehen aus kalt verformtem Stahl und zumindest im Bereich des Überstandes 11 ist der Stahl der Muldenfläche 2 gehärtet. Muldenfläche 2 und Seitenwände 3 sind verschweisst. Auch der Stiel 4 ist an der Muldenfläche 2 angeschweisst, ebenso die Griffschale 7 am Stiel 4.

Der Abschluss der Muldenfläche 2 kann mit angeschweissten Zinken 5 versehen sein, die bis unter den Auslauf der Seitenwände reichen und damit die Knickneigung des Blattes deutlich reduzieren.

Der Griff 6 ist aus Holz und ergonomisch geformt, wobei der Daumen der umfassenden Hand bevorzugt in Richtung auf den Stiel 4 zeigt. Infolge der Gestaltung der Griffschale 7 ist der Griff 6 in seiner Lage fixiert. Durch Lösen eines Befestigungselements 8 kann der Griff 6 jedoch in seiner Lage verändert oder ausgetauscht werden für verschiedene Handgrößen oder Linkshänder, ggf. auch durch eine, nicht dargestellte Stielverlängerung verändert werden kann. Der Stiel 4 kann ggf. verstellbar und/oder schwenkbar sein und ist bevorzugt abgewinkelt um eine optimale Zuordnung von Griff 6 und Schaufelmulde 1 zu erreichen.

Die beschriebene Handgrabschaufel ist nicht auf die dargestellte Ausführungsform begrenzt. Sie ist sehr universell und zugleich Schaufel, Spaten und Hacke. Sie ist zum Ausheben von Zylinderlöchern für Pflanzen oder Pfähle geeignet, wie auch für das Ausheben von länglichen Löchern oder von langen und schmalen Gräben, z. B. für Kabel oder Wasserleitungen. Die Grabtiefe kann bis zur Armlänge reichen.

Bei umgedrehter Schaufelhaltung ist sie auch zum Werfen von Material geeignet.

### Liste der Bezugszeichen

- 1: Schaufelmulde
- 2: Muldenfläche
- 3: Seitenwand
- 4: Stiel
- 5: Zinken
- 6: Griff
- 7: Griffschale
- 8: Befestigungselement
- 9: Schaufelachse
- 10: Griffachse
- 11: Überstand

## Patentansprüche

1. Gartenhandgrabschaufel, zur Anwendung in
Gartenanlagen und dergleichen, umfassend einen Griff (6) mit einem Übergang zum Schaufelblatt resp. zur Schaufelmulde (1), wobei der Übergang bevorzugt ein Stiel (4) ist,
wobei Griff (6) und Schaufelmulde (1) so V-förmig zueinander angeordnet sind, dass der Öffnungswinkel des V kleiner 90° ist, und wobei die Schaufelmulde (1) eine gewölbte Schaufel- bzw. Muldenfläche (2) aufweist, die von Seitenwänden (3) begrenzt ist und in Längsrichtung zum Auslauf hin einen weitgehend geraden Abschluss aufweist und in Querrichtung gewölbt bleibt, so dass die Schaufelmulde in ihrer Gestalt einer Baggerschaufel ähnelt, **dadurch gekennzeichnet, dass** die Schaufel- bzw. Muldenfläche (2) im geraden Bereich einen Überstand (11) ausserhalb der Seitenwände (3) aufweist.

2. Gartenhandgrabschaufel nach Anspruch 1, daurch gekennzeichnet, dass eine Achse (9) der Schaufelmulde (1) und eine Achse (10) des Griffs (6) V-förmig zueinander angeordnet sind.

3. Gartenhandgrabschaufel nach mindestens einem der Ansprüche 1 bis 2, **dadurch gekennzeichnet, dass** der Griff (6) ergonomisch geformt und mittels einer, am Stiel (4) angeordneten Griffschale (7) in seiner Position austauschbar und/oder fixierbar ist.

4. Gartenhandgrabschaufel nach mindestens einem der Ansprüche 1 bis 3, **dadurch gekennzeichnet, dass** der Stiel (4) verstellbar und/oder schwenkbar ist resp. die Position des Stiels (4) zur Schaufelmulde (1) veränderbar ist.

5. Gartenhandgrabschaufel nach mindestens einem der Ansprüche 1 bis 4, **dadurch gekennzeichnet, dass** die Seitenwände (3) parallel zueinander angeordnet sind.

6. Gartenhandgrabschaufel nach Anspruch 5, **dadurch gekennzeichnet, dass** die Seitenwände (3) etwa senkrecht zur Muldenfläche (2) angeordnet sind.

## Claims

1. Garden hand digging shovel, for use in
gardens and the like, comprising a handle (6) with a transition to the shovel plate or shovel trough (1), wherein the transition is preferably comprised of a shaft (4),
wherein the handle (6) and the shovel trough (1) have a V-shaped arrangement relative to one another, in such a way that the aperture angle of the V is less than 90°, and wherein the shovel trough (1) has a curved shovel or trough surface (2), which is delimited by side walls (3) and which has a substantially straight termination in the longitudinal direction towards the exit, and which retains its curvature in the transversal direction, so that the shovel trough's form is similar to an excavator bucket, **characterized in that** the shovel or trough surface (2) has a protrusion (11) in the straight portion, which extends outside of the side walls (3).

2. Garden hand digging shovel according to claim 1, **characterized in that** an axis (9) of the shovel trough (1) and an axis (10) of the handle (6) are positioned with a V-shaped arrangement relative to one another.

3. Garden hand digging shovel according to claim 1 to 2, **characterized in that** the handle (6) has an ergonomic shape and its position may be changed and/or fixed by means of a handle shell (7) which is positioned on the shaft (4).

4. Garden hand digging shovel according to at least one of claims 1 to 3, **characterized in that** the shaft (4) is displaceable and/or pivotable, wherein, in particular, the position of the shaft (4) may be changed with respect to the shovel trough (1).

5. Garden hand digging shovel according to at least one of claims 1 to 4, **characterized in that** the side walls (3) are parallel to each other.

6. Hand digging shovel according to claim 5, **characterized in that** the side walls (3) are approximately perpendicular to the trough surface (2).

## Revendications

1. Pelle à main de jardin pour utilisation dans un jardin ou équivalent, comprenant une poignée (6) avec un lien avec la plaque de pelle avec un godet de pelle (1), où le lien est avantageusement un bras (4), où le manche (6) et le godet de pelle (1) sont disposés de manière à former un V, en ce que l'angle d'ouverture du V est inférieur à 90°, et où le godet de pelle (1) comporte une surface (2) de pelle ou de godet en forme de voute, qui est limitée par des parois latérales (3) et comporte dans la direction longitudinale en prolongement une bordure droite étroite et demeure voutée en direction transversale, de telle façon que le godet de pelle ressemble dans son état à une pelleteuse, **caractérisée en ce que** la surface (2) de pelle ou du godet comporte dans la zone droite un prolongement (11) en dehors des parois latérales (3).

2. Pelle à main de jardin selon la revendication 1, **caractérisée en ce qu'**un axe (9) du godet (1) et un axe (10) de la poignée (6) sont disposés entre eux en formant un V.

3. Pelle à main de jardin selon l'une au moins des revendications 1 à 2, **caractérisée en ce que** la poignée (6) est réalisée de manière ergonomique et est remplaçable et/ou solidarisable dans sa position au moyen d'une coquille (7) reliée au bras (4).

4. Pelle à main de jardin selon au moins une des revendications 1 à 3, **caractérisée en ce que** le bras (4) est positionnable et/ou orientable ou bien la position du bras (4) par rapport au godet (1) est modifiable.

5. Pelle à main de jardin selon au moins une des revendications 1 à 4, **caractérisée en ce que** les parois latérales (3) sont disposées parallèlement entre elles.

6. Pelle à main de jardin selon la revendication 5, **caractérisée en ce que** les parois latérales (3) sont disposées sensiblement perpendiculairement par rapport à la surface (2) du godet.
